# EUROPEAN PATENT APPLICATION

(11) **EP 4 751 996 A1**
(43) Date of publication of application: **03.06.2026**
(21) Application number: 25218577.2
(22) Date of filing: 26.11.2025
(51) Int. Cl.: B60N 2/809, B60N 2/818, B60N 2/897

(54) **HEADREST PLUG-IN STRUCTURE AND BACKREST**

(30) Priority: 29.11.2024 CN 202422942626 U
(71) Applicant: Adient (Chongqing) Automotive Components Co., Ltd., Liangjiang New Area, Chongqing 401122 (CN)
(72) Inventor: CAI, Xianfeng, Liangjiang New Area, Chongqing, 401122 (CN); XIN, Yi, Liangjiang New Area, Chongqing, 401122 (CN); LI, Qingmao, Liangjiang New Area, Chongqing, 401122 (CN); LI, Yajun, Liangjiang New Area, Chongqing, 401122 (CN); DENG, Xinyuan, Liangjiang New Area, Chongqing, 401122 (CN)
(74) Representative: Liedtke & Partner Patentanwälte

(57) **Abstract**

The present invention discloses a headrest plug-in structure, comprising a backrest and a headrest, wherein an upper part of the backrest is provided with a sleeve assembly, the sleeve assembly has a plug-in channel extending along a height direction of the backrest, a second electrical connector vertically movable is provided within the plug-in channel, the headrest has a headrest rod adapted to the plug-in channel, a first electrical connector is fixedly provided at a lower end of the headrest rod, and the first electrical connector is capable of being plugged into the second electrical connector for conduction; a second magnetic attraction element is integrated on the second electrical connector, a first magnetic attraction element is located at any position along a height direction of the plug-in channel, and under the action of magnetic attraction between the two magnetic attraction elements, the second electrical connector is enabled to be held at a height position corresponding to the first magnetic attraction element; and in a process of pulling the headrest rod upwards out of the plug-in channel, the first electrical connector and the second electrical connector are able to be separated or disconnected at a position of the first magnetic attraction element. The beneficial effect of the present invention is that it can achieve both the height adjustment of the headrest rod and its internal wiring harness conduction while meeting the requirement for a detachable headrest.

## Description

### Technical Field

The present invention relates to the technical field of automobile seats, and specifically to a headrest plug-in structure and a backrest.

### Background of the Invention

Headrests are an extremely important safety and comfort configuration of automobile seats. Currently, in order to meet market demands for convertible seats such as those with quick-folding backrests and one-touch bed conversion, headrests need to be designed with a detachable structure.

Electrical components such as a speaker, a microphone, a heater, and a massager are integrated in the headrest, and the headrest needs to be heightadjustable. Therefore, while meeting the requirement for detachable headrests, how to achieve both the height adjustment of the headrest rod and its internal wiring harness conduction has become a technical problem that urgently needs to be solved.

### Summary of the Invention

In view of this, the present invention provides a headrest plug-in structure and a backrest to meet the above technical requirement.

To achieve the above objective, the technical solution of the present patent application is as follows:
A headrest plug-in structure, comprising a backrest and a headrest detachably connected to an upper part of the backrest, with the following key features: the upper part of the backrest is provided with a sleeve assembly, the sleeve assembly has a plug-in channel extending along a height direction of the backrest, a second electrical connector vertically movable is provided in the plug-in channel, the headrest has a headrest rod adapted to the plug-in channel, a first electrical connector is fixedly provided at a lower end of the headrest rod, and the first electrical connector is capable of being plugged into the second electrical connector for conduction;
a second magnetic attraction element is integrated on the second electrical connector, a first magnetic attraction element is located at any position along a height direction of the plug-in channel, and under the action of magnetic attraction between the two magnetic attraction elements, the second electrical connector is enabled to be held at a height position corresponding to the first magnetic attraction element;
in a process of inserting the headrest rod downwards into the plug-in channel, a magnetic attraction resistance between the first magnetic attraction element and the second magnetic attraction element is able to ensure that the first electrical connector is plugged into the second electrical connector for conduction; and
in a process of pulling the headrest rod upwards out of the plug-in channel, the first electrical connector and the second electrical connector are able to be separated or disconnected at a position of the first magnetic attraction element.

With the above structure, the second electrical connector can be pre-positioned at the height corresponding to the first magnetic attraction element under the action of magnetic attraction between the two magnetic attraction elements. During the downward insertion of the headrest rod into the plug-in channel, the magnetic attraction resistance between the first and second magnetic attraction elements allows the lower end of the first electrical connector to be plugged into the upper end of the second electrical connector for conduction. When the headrest height is adjusted, the headrest rod breaks through the magnetic attraction and continues to move downwards, allowing the second magnetic attraction element to move downwards away from the first magnetic attraction element. Therefore, the first electrical connector and the second electrical connector are driven to move synchronously up and down in the space below the first magnetic attraction element, ensuring that the first electrical connector and the second electrical connector remain energized during headrest height adjustment, thereby guaranteeing the stable operation of the electrical components within the headrest. When the headrest needs to be detached, the headrest rod is pulled upwards. In the process of pulling the headrest rod upwards out of the plug-in channel, the second electrical connector can stably remain at the height position corresponding to the first magnetic attraction element, the first electrical connector and the second electrical connector are separated and disconnected, and the first electrical connector continues to be pulled out of the plug-in channel along with the headrest rod.

Preferably, the sleeve assembly comprises a guide cylinder, and a guide sleeve located at a lower end position of the guide cylinder, wherein the guide cylinder and the guide sleeve are connected in a vertical direction to form the plug-in channel.

Preferably, a sliding channel extending along a height direction is provided inside the guide sleeve, the first magnetic attraction element is fixedly disposed at a top end of the sliding channel, the second electrical connector has a support platform adapted to the sliding channel, and the second magnetic attraction element is disposed on the support platform.

Preferably, the top end of the sliding channel is provided with a first insertion slot that is open on one side, and the first magnetic attraction element is fixedly provided in the first insertion slot.

Preferably, two first insertion slots and two first magnetic attraction elements are provided and correspond one-to-one, the two first insertion slots are arranged at both ends of the top part of the sliding channel, and the two first magnetic attraction elements are rectangular block structures.

Preferably, the support platform is provided with two third insertion slots, the two third insertion slots correspond vertically to the two first insertion slots, respectively, two second magnetic attraction elements are provided, and the two second magnetic attraction elements are fixedly provided in the two third insertion slots; and the two second magnetic attraction elements are rectangular block structures.

Preferably, a guide slot extending in a height direction is provided on a side wall of the sliding channel, and a guide block that is in sliding fit with the guide slot is provided on a side part of the support platform.

Preferably, the first magnetic attraction element and/or the second magnetic attraction element are/is U-shaped structures.

Preferably, a locking mechanism is provided between an upper end of the guide cylinder and the headrest rod, and the locking mechanism is used to lock the headrest rod at a specified height.

Preferably, the headrest rod is provided with a locking slot distributed along a height direction, the locking mechanism comprises a mounting seat fixedly provided on the upper end of the guide cylinder, the mounting seat is provided with a first connecting through hole for the headrest rod to pass through, a control component is movably nested within the mounting seat, the control component is provided with a second connecting through hole for allowing the headrest rod to pass through without interference, a side wall of the second connecting through hole is directly opposite to a position locking strip of the locking slot, an elastic component is provided between the control component and the mounting seat, and the elastic component applies a force to lock the locking strip on the locking slot.

Compared with the prior art, the present invention has the following beneficial effects:
1. With the headrest plug-in structure provided by the present invention, the second electrical connector can be pre-positioned at the height corresponding to the first magnetic attraction element under the action of magnetic attraction between the two magnetic attraction elements. During the downward insertion of the headrest rod into the plug-in channel, the magnetic attraction resistance between the first and second magnetic attraction elements allows the lower end of the first electrical connector to be plugged into the upper end of the second electrical connector for conduction. At this time, the integrated electrical components inside the headrest can be energized, completing the installation of the headrest rod. When the headrest height is adjusted, the headrest rod breaks through the magnetic attraction and continues to move downwards, allowing the second magnetic attraction element to move downwards away from the first magnetic attraction element. Therefore, the first electrical connector and the second electrical connector are driven to move synchronously up and down in the space below the first magnetic attraction element, ensuring that the first electrical connector and the second electrical connector remain energized during headrest height adjustment, thereby guaranteeing the stable operation of the electrical components within the headrest. When the headrest needs to be detached, the headrest rod is pulled upwards. In the process of pulling the headrest rod upwards out of the plug-in channel, the second electrical connector can stably remain at the height position corresponding to the first magnetic attraction element, the first electrical connector and the second electrical connector are separated and disconnected, and the first electrical connector continues to be pulled out of the plug-in channel along with the headrest rod, completing the detachment of the headrest.
2. The first and second magnetic attraction elements are magnetically attracted in an up-and-down manner, providing the advantage of a more stable structure. In addition, when the headrest bar is pulled out, the first magnetic attraction element, combined with its installation structure, can provide more sufficient resistance to achieve quick pull-out of the headrest rod.

### Brief Description of the Drawings

Fig. 1 is a schematic structural view of a headrest plug-in structure;
Fig. 2 is a cross-sectional view of the headrest plug-in structure;
Fig. 3 is a magnified view of part D in Fig. 2;
Fig. 4 is a magnified view of part E in Fig. 2;
Fig. 5 is an exploded view of a guide sleeve 2 and a second electrical connector 5;
Fig. 6 is a schematic view showing the connection relationship between a locking mechanism 9 and a headrest rod 3;
Fig. 7 is a schematic structural view of a control component 92;
Fig. 8 is a cross-sectional view of a guide sleeve 2 in another embodiment; and
Fig. 9 is an exploded view of a guide sleeve 2 and a second electrical connector 5 in another embodiment.

### Detailed Description of the Preferred Embodiments

The present invention will be further described below with reference to the embodiments and drawings.

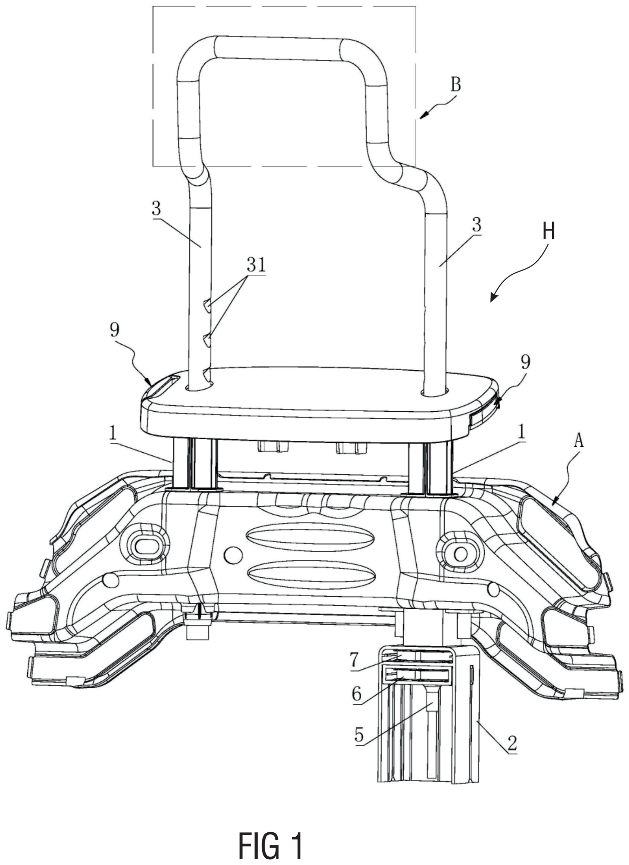

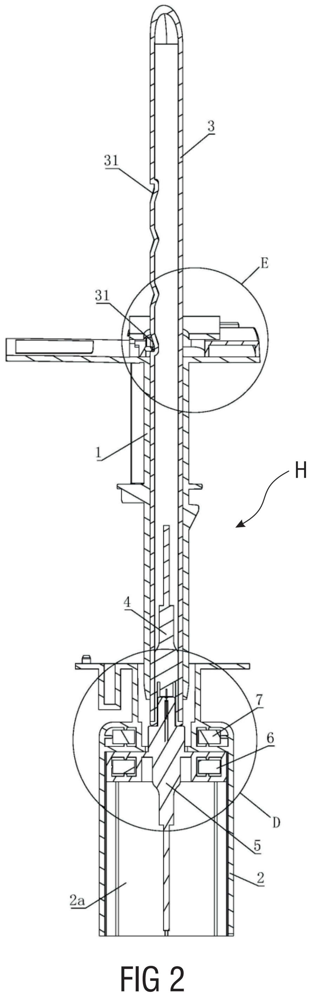

As shown in Figs 1 and 2, a headrest plug-in structure H comprises a backrest A and a headrest B detachably connected to the upper part of the backrest A, wherein electrical components such as a speaker or a microphone are integrated within the headrest B. A sleeve assembly is provided on the upper part of the backrest A. The sleeve assembly has a plug-in channel extending along the height direction of the backrest. A second electrical connector 5 vertically movable is provided within the plug-in channel. The lower end of the second electrical connector 5 can be electrically connected to a power source in a vehicle through a backrest wiring harness. The headrest B has a headrest rod 3 adapted to the plug-in channel. A first electrical connector 4 is fixedly provided on the lower end of the headrest rod 3. The upper end of the first electrical connector 4 is electrically connected to the electrical components within the headrest B through the headrest wiring harness, and the lower end of the first electrical connector can be plugged into the upper end of the second electrical connector 5 for conduction. After the first electrical connector 4 is connected to the second electrical connector 5, the electrical components within the headrest B can be energized.

A second magnetic attraction element 6 is integrated on the second electrical connector 5, and a first magnetic attraction element 7 is located at any position along the height direction of the plug-in channel. Under the action of magnetic attraction between the two magnetic attraction elements, the second electrical connector 5 is enabled to remain at a height position corresponding to the first magnetic attraction element 7. During the downward insertion of the headrest rod 3 into the plug-in channel, the magnetic attraction resistance between the first magnetic attraction element 7 and the second magnetic attraction element 6 can ensure that the first electrical connector 4 is plugged into the second electrical connector 5 for conduction. In the process of pulling the headrest rod 3 upwards out of the plug-in channel, the first electrical connector 4 and the second electrical connector 5 can be separated or disconnected at the position of the first magnetic attraction element 7.

On the basis of the above structural design, the insertion process of the headrest rod 3 is as follows: Under the action of magnetic attraction between the two magnetic attraction elements, the second electrical connector 5 can be pre-positioned at the height position corresponding to the first magnetic attraction element 7. During the downward insertion of the headrest rod 3 into the plug-in channel, the magnetic attraction resistance between the first magnetic attraction element 7 and the second magnetic attraction element 6 enables the lower end of the first electrical connector 4 to be plugged into the upper end of the second electrical connector 5 for conduction. At this time, the electrical components integrated in the headrest can be energized, completing the installation of the headrest rod 3. When the height of the headrest B is adjusted, the headrest rod 3 breaks through the magnetic attraction and continues to move downwards, enabling the second magnetic attraction element 6 to move downwards away from the first magnetic attraction element 7. Therefore, the first electrical connector 4 and the second electrical connector 5 are driven to move synchronously up and down in the space below the first magnetic attraction element 7, ensuring that the first electrical connector 4 and the second electrical connector 5 remain energized during the height adjustment of the headrest B, thereby guaranteeing the stable operation of the electrical components within the headrest B. When the headrest B needs to be detached, the headrest rod 3 is pulled upwards. In the process of pulling the headrest rod 3 upwards out of the plug-in channel, the second electrical connector 5 can stably remain at the height position corresponding to the first magnetic attraction element 7, the first electrical connector 4 and the second electrical connector 5 are separated and disconnected, and the first electrical connector 4 continues to be pulled out of the plug-in channel along with the headrest rod 3, completing the detachment of the headrest B.

In this embodiment, the first magnetic attraction element 7 and the second magnetic attraction element 6 are two magnets that attract each other. In practical applications, the first magnetic attraction element 7 and the second magnetic attraction element 6 may also be a combination of a metal part and a magnet, which are equivalent replacements in this field and also can achieve the same magnetic attraction effect.

Further, referring to Fig. 2 again, for ease of installation, the sleeve assembly comprises a guide cylinder 1 and a guide sleeve 2 located at the lower end of the guide cylinder 1. The guide cylinder 1 and the guide sleeve 2 are connected in the vertical direction to form a plug-in channel.

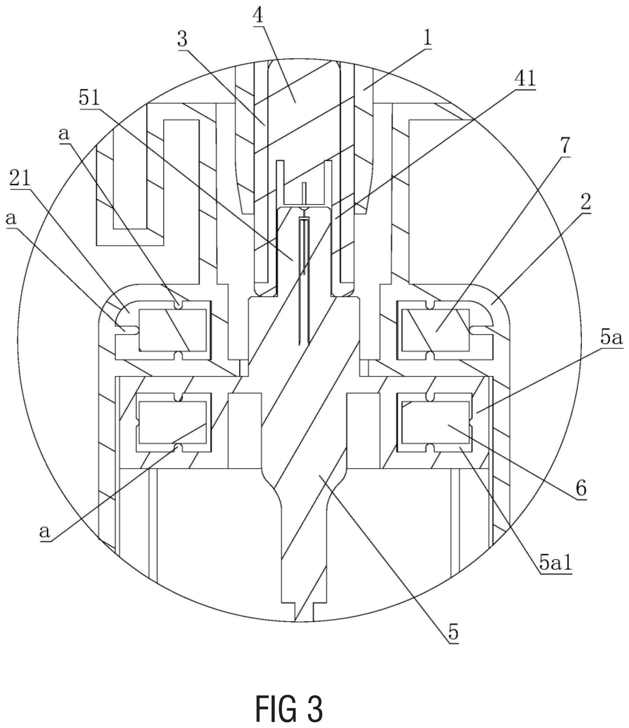

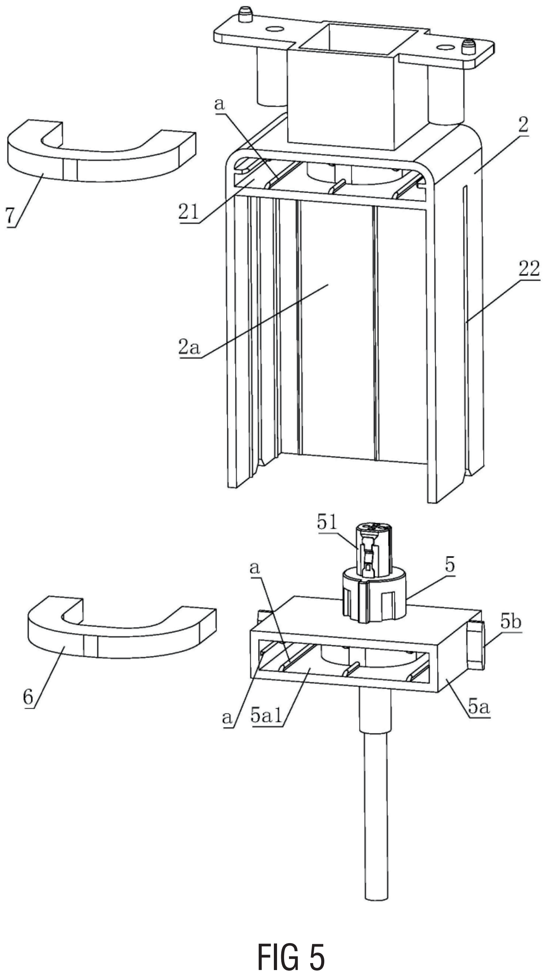

Specifically, as shown in Figs 3 and 5, a sliding channel 2a extending along a height direction is provided inside the guide sleeve 2. The first magnetic attraction element 7 is fixedly disposed at the top end of the sliding channel 2a, and the second electrical connector 5 has a support platform 5a adapted to the sliding channel 2a. The second magnetic attraction element 6 is disposed on the support platform 5a. By symmetrically arranging the first magnetic attraction element 7 and the second magnetic attraction element 6 vertically, the advantage of this design is that the magnets attracted vertically have a more stable structure, enabling the second electrical connector 5 to be more stably maintained at the height position corresponding to the first magnetic attraction element 7. At the same time, when the headrest rod 3 is pulled out, the first magnetic attraction element 7, combined with its installation structure, can provide more sufficient resistance to enable the headrest rod 3 to be pulled out quickly, improving the convenience of detaching the headrest B.

Furthermore, as shown in Fig. 5, for ease of installation, the top end of the sliding channel 2a is provided with a first insertion slot 21 that is open on one side, and the first magnetic attraction element 7 is fixedly provided in the first insertion slot 21. The support platform 5a corresponding thereto has a second insertion slot 5a1 that is open on one side, and the second magnetic attraction element 6 is fixedly provided in the second insertion slot 5a1.

In this embodiment, the sliding channel 2a is a square channel, and both the first magnetic attraction element 7 and the second magnetic attraction element 6 are U-shaped structures. Such a design enables the magnets of the U-shaped structures to realize the easier insertion and installation, while the second electrical connector 5 can be disposed in the middle of the magnets of the U-shaped structures, resulting in a more compact overall structure.

As shown in Figs 3 and 5, both the first insertion slot 21 and the second insertion slot 5a1 have, on their slot walls, reinforcing ribs a protruding from the slot walls, to ensure that the first magnetic attraction element 7 and the second magnetic attraction element 6 can be more securely installed in the slots.

As shown in Fig. 5, a guide slot 22 extending along a height direction is provided on the side wall of the sliding channel 2a. The side part of the support platform 5a has a guide block 5b that is in sliding fit with the guide slot 22. The guide slot 22 has a guiding function and can improve the smoothness of the second electrical connector 5 sliding up and down. In this embodiment, two guide slots 22 are provided, and are symmetrically arranged on both sides of the guide sleeve 2. The lower parts of the guide slots 22 each are open. The guide block 5b can enter the guide slot 22 through the open end of the guide slot 22, thereby facilitating the detachment and installation of the second electrical connector 5.

As shown in Figs 3 and 5, the upper end of the second electrical connector 5 has an upwardly extending second insertion part 51, and the lower end of the first electrical connector 4 has a first insertion part 41 that is detachably connected to the second insertion part 51. The first insertion part 41 is fastened onto the second insertion part 51, thus completing the insertion between the first electrical connector 4 and the second electrical connector 5 for conduction.

In this embodiment, two headrest rods 3 and two matching guide cylinders 1 are provided and correspond one to one, and the first electrical connector 4 is disposed at the lower end of a headrest rod 3.

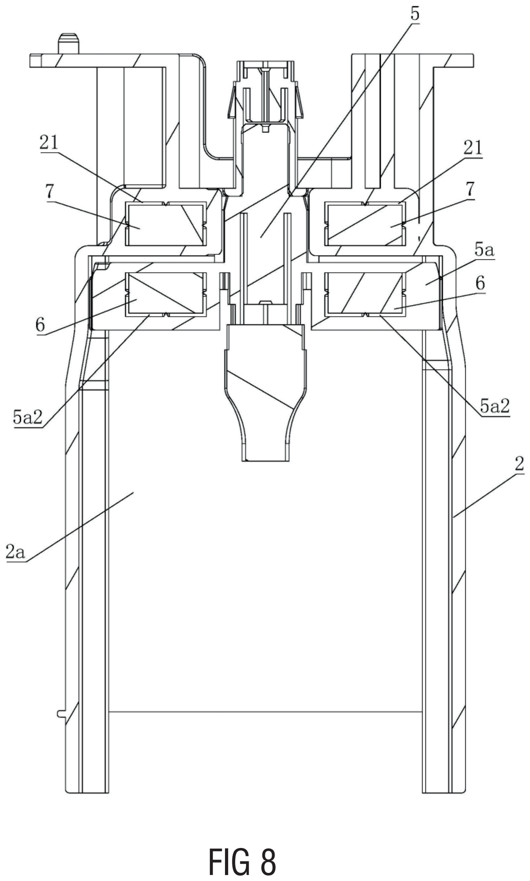

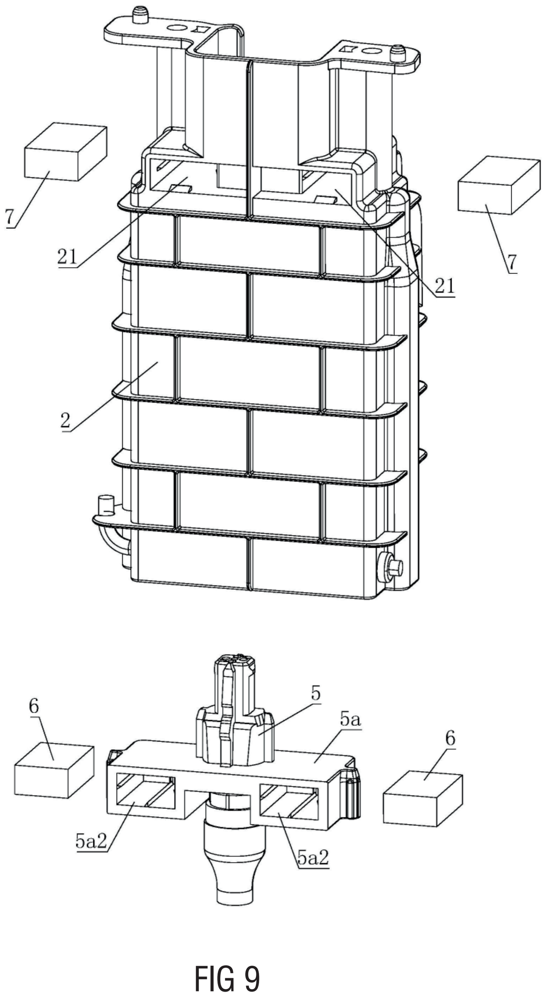

In addition to the above embodiments, the structure and installation method of the first magnetic attraction element 7 and the second magnetic attraction element 6 may also be as shown in Figs 8 and 9. Two first insertion slots 21 and two first magnetic attraction elements 7 are provided, and the two first magnetic attraction elements 7 are fixedly installed within the two first insertion slots 21, respectively. The two first insertion slots 21 are arranged at both ends of the top part of the sliding channel 2a, and a clearance channel is provided between the two first insertion slots 21 to allow the headrest rod 3 to slide up and down. In this embodiment, the two first magnetic attraction elements 7 are rectangular block structures.

Further, referring to Figs 8 and 9 again, the support platform 5a is provided with two third insertion slots 5a2. The two third insertion slots 5a2 are in one-to-one correspondence with the two first insertion slots 21 in the height direction of the sliding channel 2a, respectively. Two second magnetic attraction elements 6 are provided. The two second magnetic attraction elements 6 are fixedly provided within the two third insertion slots 5a2, respectively. The two second magnetic attraction elements 6 are rectangular block structures. With this design, the second electrical connector 5 can also stably remain at the height position corresponding to the first magnetic attraction element 7, and the first magnetic attraction element 7, combined with its installation structure, can also provide sufficient resistance to facilitate the quick pull-out of the headrest rod 3.

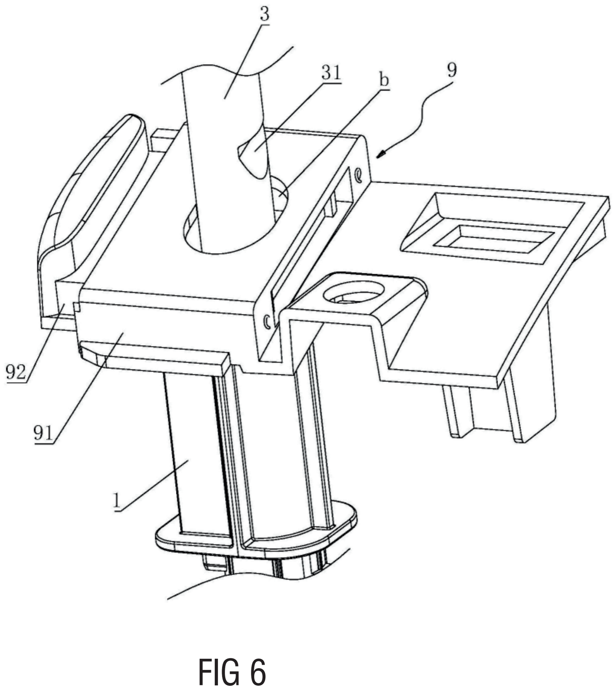

As shown in Figs 1 and 6, a locking mechanism 9 is provided between the upper end of the guide cylinder 1 and the headrest rod 3. This locking mechanism 9 can lock the headrest rod 3 at a specified height.

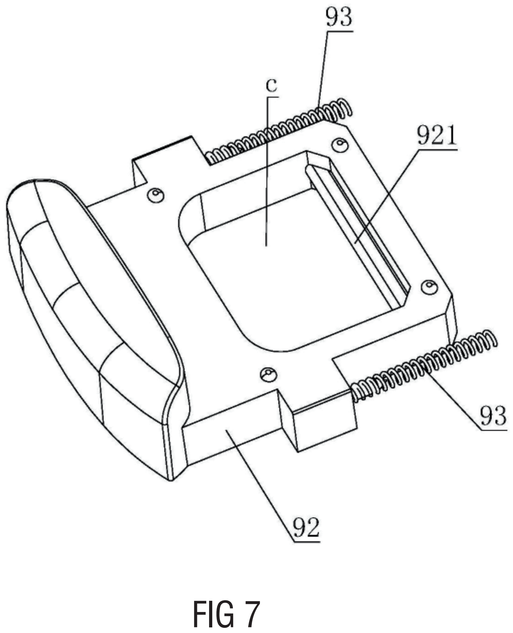

Specifically, referring to Figs 1 and 6 again, the headrest rod 3 has locking slots 31 distributed along a height direction. The locking mechanism 9 comprises a mounting seat 91 fixedly provided on the lower side of a transition support member 8. The mounting seat 91 is provided with a first connecting through hole b for the headrest rod 3 to pass through. A control component 92 is movably nested within the mounting seat 91. As can be seen from Fig. 7, the control component 92 is provided with a second connecting through hole c for allowing the headrest rod 3 to pass through without interference. The side wall of the second connecting through hole c is directly opposite to a position locking strip 921 of the locking slot 31. An elastic component 93 is provided between the control component 92 and the mounting seat 91. The elastic component 93 applies a force to lock the locking strip 921 onto the locking slot 31.

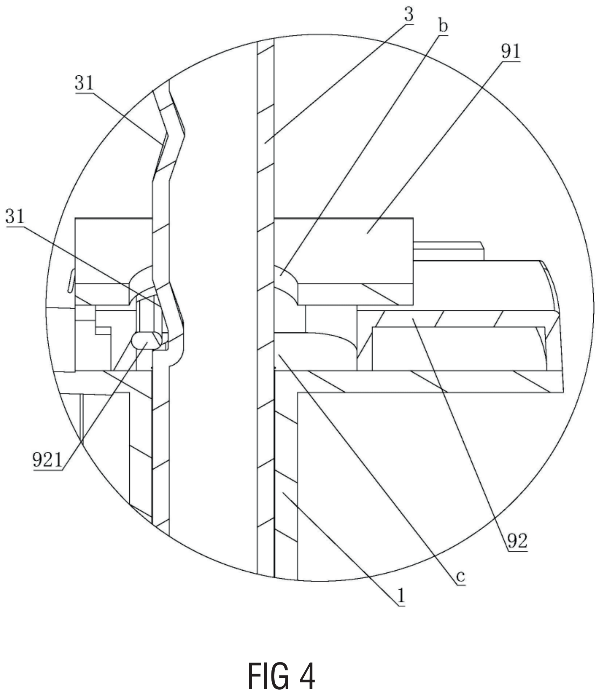

With reference to Fig. 4, when the height of the headrest rod 3 is adjusted, the control component 92 is pressed. The control component 92 can compress the elastic component 93, so that the locking strip 921 on the control component 92 moves away from the locking slot 31 of the headrest rod 3. The headrest rod 3 can move up and down along the guide cylinder 1. After adjusting to a suitable height, the control component 92 is released. The elastic component 93 can release the elastic force, so that the control component 92 moves outwards. At this time, the locking strip 921 on the control component 92 can be locked in the corresponding locking slot 31. In addition, the force applied by the elastic component 93 can keep the control component 92 in the current position, achieving the purpose of locking the headrest rod 3.
Finally, it should be noted that only preferred embodiments of the present invention have been described above. In light of the present invention, those of ordinary skill in the art can make various similar expressions without departing from the spirit and claims of the present patent application, and such changes all fall within the scope of protection of the present patent application.

### List of References

- 1: guide cylinder
- 2: guide sleeve
- 2a: sliding channel
- 3: headrest rod
- 4: first electrical connector
- 5: second electrical connector
- 5a1: second insertion slot
- 5a: support platform
- 5b: guide block
- 6: second magnetic attraction element
- 7: first magnetic attraction element
- 8: transition support member
- 9: locking mechanism
- 21: first insertion slot
- 22: guide slot
- 31: locking slot
- 41: first insertion part
- 51: second insertion part
- 91: mounting seat
- 92: control component
- 93: elastic component
- 921: locking strip

- A: backrest
- B: headrest
- H: Headrest plug-in structure

## Claims

1. Headrest plug-in structure (H), comprising a backrest (A) and a headrest (B) detachably connected to an upper part of the backrest (A),
**characterised in that**:
- the upper part of the backrest (A) is provided with a sleeve assembly,
- the sleeve assembly has a plug-in channel extending along a height direction of the backrest,
- a second electrical connector (5) vertically movable is provided in the plug-in channel,
- the headrest (B) has a headrest rod (3) adapted to the plug-in channel,
- a first electrical connector (4) is fixedly provided at a lower end of the headrest rod (3), and
- the first electrical connector (4) is capable of being plugged into the second electrical connector (5) for conduction;
- a second magnetic attraction element (6) is integrated on the second electrical connector (5),
- a first magnetic attraction element (7) is located at any position along a height direction of the plug-in channel, and
- under the action of magnetic attraction between the two magnetic attraction elements, the second electrical connector (5) is enabled to be held at a height position corresponding to the first magnetic attraction element (7);
- in a process of inserting the headrest rod (3) downwards into the plug-in channel, a magnetic attraction resistance between the first magnetic attraction element (7) and the second magnetic attraction element (6) is able to ensure that the first electrical connector (4) is plugged into the second electrical connector (5) for conduction;
- in a process of pulling the headrest rod (3) upwards out of the plug-in channel, the first electrical connector (4) and the second electrical connector (5) are able to be separated or disconnected at a position of the first magnetic attraction element (7); and
- the sleeve assembly comprises a guide sleeve (2), a sliding channel (2a) extending along a height direction is provided inside the guide sleeve (2),
- the second electrical connector (5) has a support platform (5a) adapted to the sliding channel (2a),
- a top end of the sliding channel (2a) is provided with a first insertion slot (21) that is open on one side,
- the support platform (5a) has a second insertion slot (5a1) that is open on one side,
- the first magnetic attraction element (7) is fixedly provided in the first insertion slot (21), and
- the second magnetic attraction element (6) is fixedly provided in the second insertion slot (5a1); and
- both the first magnetic attraction element (7) and the second magnetic attraction element (6) are U-shaped structures.

2. Headrest plug-in structure (H) according to Claim 1, **characterised in that**: the sleeve assembly further comprises a guide cylinder (1), the guide sleeve (2) is located at a lower end of the guide cylinder (1), and the guide cylinder (1) and the guide sleeve (2) are connected in a vertical direction to form the plug-in channel.

3. Headrest plug-in structure (H) according to Claim 1 or Claim 2, **characterised in that**: a guide slot (22) extending in a height direction is provided on a side wall of the sliding channel (2a), and a guide block (5b) that is in sliding fit with the guide slot (22) is provided on a side part of the support platform (5a).

4. Headrest plug-in structure (H) according to Claim 2, **characterised in that**: a locking mechanism (9) is provided between an upper end of the guide cylinder (1) and the headrest rod (3), and the locking mechanism (9) is used to lock the headrest rod (3) at a specified height.

5. Headrest plug-in structure (H) according to Claim 4, **characterised in that**: the headrest rod (3) is provided with a locking slot (31) distributed along a height direction, the locking mechanism (9) comprises a mounting seat (91) fixedly provided on the upper end of the guide cylinder (1), the mounting seat (91) is provided with a first connecting through hole (b) for the headrest rod (3) to pass through, a control component (92) is movably nested within the mounting seat (91), the control component (92) is provided with a second connecting through hole (c) for allowing the headrest rod (3) to pass through without interference, a side wall of the second connecting through hole (c) is directly opposite to a position locking strip (921) of the locking slot (31), an elastic component (93) is provided between the control component (92) and the mounting seat (91), and the elastic component (93) applies a force to lock the locking strip (921) on the locking slot (31).

6. Backrest (B) comprising a headrest plug-in structure (H) according to one of the preceding claims.
